## Europäisches Patentamt

## European Patent Office

## Office européen des brevets

(11) Publication number: **0 172 144**
**B1**

(12) **EUROPEAN PATENT SPECIFICATION**

(45) Date of publication of patent specification: **20.04.88**

(51) Int. Cl.⁴: **B 60 R 13/06**

(21) Application number: **85830192.2**

(22) Date of filing: **24.07.85**

(54) Sealing strip for motor vehicle doors having rounded edges.

(30) Priority: **02.08.84 IT 6776884**

(43) Date of publication of application:
**19.02.86 Bulletin 86/08**

(45) Publication of the grant of the patent:
**20.04.88 Bulletin 88/16**

(84) Designated Contracting States:
**DE FR GB SE**

(56) References cited:
**EP-A-0 102 556**
**EP-A-0 111 738**
**DE-A-2 653 060**
**DE-B-1 071 504**
**FR-A-2 076 314**
**FR-A-2 229 581**
**FR-A-2 520 467**
**GB-A-1 102 086**

**PATENTS ABSTRACTS OF JAPAN, vol. 8, no. 244 (M-331) 1661r, 13th October 1984; & JP - A - 59 106 344 (KINUGAWA GOMU KOGYO K.K.) 20-06-1984**

**PATENTS ABSTRACTS OF JAPAN, vol. 8, no. 203 (M-326) 1640r, 18th September 1984; & JP - A - 59 92 230 (KINUGAWA GOMU KOGYO K.K.) 28-05-1984**

(73) Proprietor: **FIAT AUTO S.p.A.**
**Corso Giovanni Agnelli 200**
**I-10135 Torino (IT)**

(72) Inventor: **Castagno, Aldo**
**Via Baveno 46**
**I-10100 - Torino (IT)**

(56) References cited:

**PATENTS ABSTRACTS OF JAPAN, vol. 8, no. 182 (M-319) 1619r, 22nd August 1984; & JP - A - 59 73 342 (NISSAN JIDOSHA K.K.) 25-04-1984**

**PATENTS ABSTRACTS OF JAPAN, vol. 7, no. 279 (M-262) 1424r, 13th December 1983; & JP - A - 58 156 415 (KINUGAWA GOMU KOGYO K.K.) 17-09-1983**

**PATENTS ABSTRACTS OF JAPAN, vol. 7, no. 110 (M-214) 1255r, 13th May 1983; & JP - A - 58 30 847 (KINUGAWA GOMU KOGYO K.K.) 23-02-1983**

**PATENTS ABSTRACTS OF JAPAN, vol. 6, no. 93 (M-133) 971r, 29th May 1982; & JP - A - 57 30 640 (NISSAN JIDOSHA K.K.) 18-02-1982**

Courier Press, Leamington Spa, England.

## Description

The present invention refers to a sealing strip for motor vehicle doors with rounded edges consisting of two portions, one in plastics or semi-stiff rubber and the other in soft rubber as specified in the preamble of claim 1, for example as disclosed in EP—A—0102556.

At present, in order to improve the aerodynamics of the motor vehicles, the door profile is designed with rounded edges in the upper part, so to cover the roof drainage channel.

In fact, when it was not covered, it considerably increased the air drag coefficient.

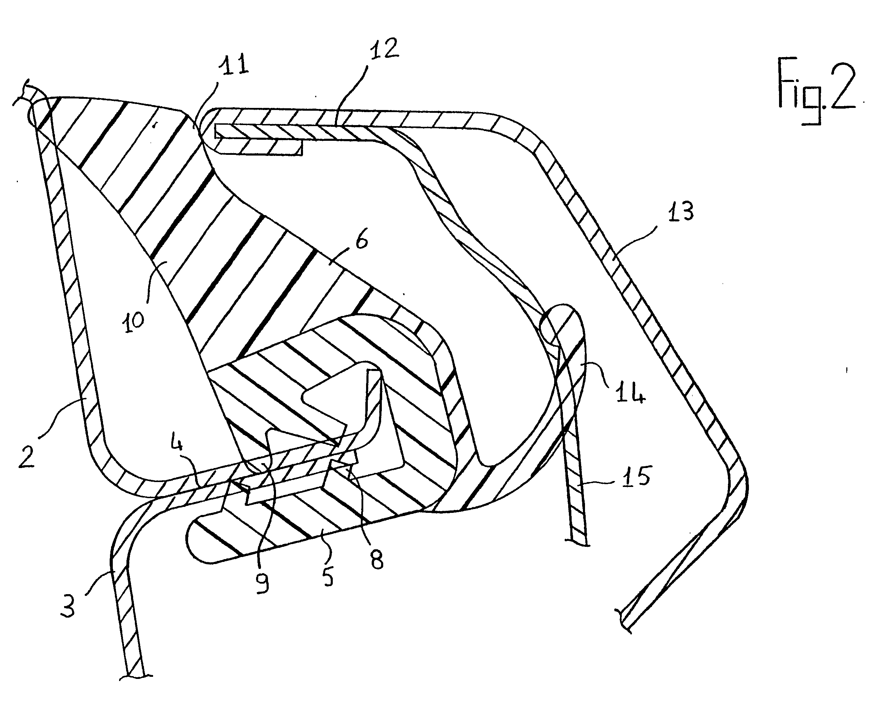

The sealing strips which are used at present to make water-tight this type of doors consist of a portion in semi-stiff plastics or in elastomeric material, sometimes with a metallic cure, glued to a rubber tubular portion shaped accordingly to the needs, as it can be seen in the Fig. 2 of the EP—A—0 102 556.

An inconvenience of this type of sealing strip is that it very seldom maintains the initial shape when it is bent to fit into the door rim.

In fact, when the strip is bent, the shape is different, and this may involve inconveniences of functional type (such as wind turbulance, noises, and in the worst cases water seepage) or of aesthetic type, as the rubber does not lie flush with the car body, but can present recessings or projections.

A second inconvenience is that the vibrations of the running motor vehicle may cause a continuous rubbing of the rubber portion against the door rim; this action may remove the paint from the metal parts, leaving them unprotected and exposed to rust.

A further inconvenience is that a sealing strip of the above said type presents rather considerable difficulties when butting.

Purpose of the present invention is to avoid these inconveniences.

This purpose is attained by a sealing strip in an arrangement with a motor vehicle door with rounded upper edges, consisting of two separate portions, the first of which, in plastics or semi-stiff rubber, is U-shaped and is put on the metal edge of the door opening and the second one is in rubber, is glued on the first one, and has a nearly trapezoidal portion a portion projecting in a lip laterally protruding outwards the door opening while the trapezoidal portion projects towards the upper part of the door opening, characterized in that the second, trapezoidal portion is made of soft, solid rubber and its side directed outwards the door opening presents a projection where the upper edge of the door compresses it.

The invention will be clearer from the following description with reference to the accompanying drawings, supplied only by way of non-limiting examples, in which:

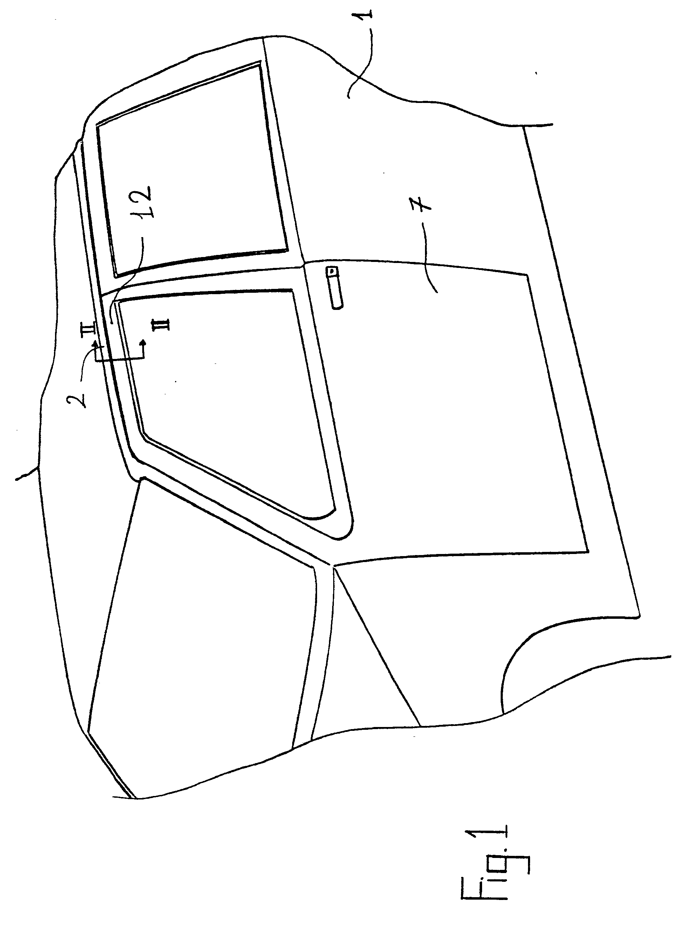

—Fig. 1 is a schematic view of a motor vehicle body side provided with the sealing strip according to the invention;

—Fig. 2 is a sectional view of the sealing strip according to the invention on the line II—II of Fig. 1.

With reference to the figures, 1 indicates the motor vehicle body side whose roof 2, welded together with the middle part 3, forms a rim 4 which functions as rain channel.

On the rim 4 it is put the first portion 5 in plastics or semi-stiff rubber of a sealing strip 6 for a door 7 having rounded edges.

The above mentioned first portion has a U-shaped section and is provided with internal herring-bone projections 8 contributing to hold it firmly inserted on the rim 4, furthermore the upper internal wall of the portion 5 presents a rounded projection 9 which, contacting the metal, bounds the rain channel between the roof 2 and the sealing strip.

On the first portion 5 in plastics it is glued a second portion 10 of the sealing strip 6 in full soft rubber, having a nearly trapezoidal shape and directed upwards the door opening (when the sealing strip is positioned).

On the trapezium side directed outwards the door opening it is obtained, in the sealing strip profile, a rounded projection 11 which makes the upper profile of the sealing strip nearly flat with aesthetic and aerodynamic functions, rabbets the upper edge 12 of the box structure of the door 13, so that it does not work by sliding, but by compression and the door opening is completely sealed and connected to the adjacent metal parts.

The sealing strip portion 10 in soft full rubber extends on the outer side of the first portion and forms a lip 14 laterally extending w.r.t. the door opening and, acting against the metal part 15 of the box structure of the door when it is closed, it constitutes a further barrier against the seepage of air or of water from the outside.

The whole, as it can be easily understood, constitutes a perfect link between the door rims and the motor vehicle body roof, so that the gap between the metal parts is completely sealed.

## Claim

Sealing strip (6) in an arrangement with a motor vehicle door (7) with rounded upper edges, consisting of two separate portions (5, 10), the first (5) of which, in plastics or semi-stiff rubber, is U-shaped and is put on the metal edge of the door opening and the second one (10) is in rubber, is glued on the first one (5) has a nearly trapezoidal portion and a portion projecting in a lip (14) laterally protruding outwards the door opening while the trapezoidal portion projects towards the upper part of the door opening characterized in that the second, trapezoidal portion (10) is made of soft, solid rubber and its side directed outwards the door opening presents a projection (11) where the upper edge (12) of the door (7) compresses it.

## Patentanspruch

Dichtleiste (6) zur Verwendung an einer Fahrzeugtür (7) mit abgerundeten oberen Kanten, bestehend aus zwei unterschiedlichen Teilen (5, 10), von denen der erste, aus Kunststoff oder halbsteifem Gummi bestehende Teil (5) U-förmig ausgebildet und auf die Metallkante der Türöffnung aufgesetzt ist, während der zweite, aus Gummi bestehende Teil (10) mit dem ersten Teil (5) verklebt ist und einen im wesentlichen trapezförmigen Abschnitt sowie eine abstehende Lippe (14) hat, die seitlich aus der Türöffnung heraussteht, während sich der trapezförmige Abschnitt zu dem oberen Teil der Türöffnung erstreckt, dadurch gekennzeichnet, daß der zweite, trapezförmige Abschnitt (10) aus weichem Vollgummi besteht und an seiner aus der Türöffnung hervorstehenden Seite einen Vorsprung (11) hat, der von der oberen Kante (12) der Tür (7) komprimiert wird.

**Revendication**

Bande d'étanchéité (5) agencée en association avec une porte (7) de véhicule automobile dotée de bords supérieurs arrondis, faite de deux parties séparées (5, 10), la première (5), en matière plastique ou en caoutchouc semi-rigide, étant en forme de U et étant appliquée sur le bord métallique de l'embrasure de la porte, et la seconde (10), en caoutchouc, étant collée sur la première (5) et ayant une partie approximativement trapézoïdale et une partie saillante en forme de lèvre (14) formant saillie latéralement vers l'extérieur de l'embrasure de la porte, tandis que la partie trapézoïdale fait saillie vers la partie supérieure de l'embrasure de la porte, caractérisée en ce que la seconde partie (10), trapézoïdale, est faite de caoutchouc souple massif, son côté dirigé vers l'extérieur par rapport à l'embrasure de la porte présentant un saillant (11) là où le bord supérieur (12) de la porte la comprime.

Fig.1

2
II
II
12
1
7

0 172 144

Fig. 2